# EUROPÄISCHE PATENTSCHRIFT

(11) **EP 4 202 583 B1**
(45) Veröffentlichungstag und Bekanntmachung des Hinweises auf die Patenterteilung: **05.11.2025**
(21) Anmeldenummer: 22212701.1
(22) Anmeldetag: 12.12.2022
(51) Int. Cl.: G05B 19/418, B26D 5/00, B65B 25/06, B65B 35/24, B65B 35/16, B65B 41/12

(54) **PRODUKTIONSLINIE ZUM HERSTELLEN VERPACKTER PRODUKTE MIT VORAUSSCHAUENDER ERFASSUNG EINER ERFORDERLICHEN BEDIENERINTERAKTION**
PRODUCTION LINE FOR PRODUCING PACKAGED PRODUCTS WITH PREDICTIVE ACQUISITION OF REQUIRED OPERATOR INTERACTION
LIGNE DE PRODUCTION POUR PRODUIRE DES PRODUITS EMBALLÉS AVEC DÉTECTION ANTICIPÉE D'INTERACTION UTILISATEUR REQUISE

(30) Priorität: 22.12.2021 DE 102021134345
(43) Veröffentlichungstag der Anmeldung: 28.06.2023
(73) Patentinhaber: MULTIVAC Sepp Haggenmüller SE & Co. KG, 87787 Wolfertschwenden (DE)
(72) Erfinder: Buchenberg, Wolfgang, 87487 Wiggensbach (DE)
(74) Vertreter: Grünecker Patent- und Rechtsanwälte PartG mbB

(56) Entgegenhaltungen:
- EP-A1- 3 487 765
- DE-A1- 102015 120 478
- DE-T2- 60 306 231

## Beschreibung

Die vorliegende Erfindung betrifft Produktionslinien zum Herstellen verpackter Produkte mit mehreren Arbeitsstationen.

Die DE 603 06 231 T offenbart ein System zur Herstellung von Tabakwaren mit einer Anzahl von Maschinen, welchen jeweils eine Puffereinheit zum Vorrätighalten von Verbrauchsmaterialien zugeordnet ist. Jede der Puffereinheiten ist mit einem Fühler ausgestattet, welcher eine Menge des darin enthaltenen Materials anzeigt. Ebenfalls angeschlossen an die Hauptsteuereinheit ist eine Anzahl von Zählern die in der Lage sind, die Zahl der aus den einzelnen Maschinen austretenden Produkte zu errechnen. Auf Basis der erfassten Eingangsdaten bestimmt die Hauptsteuereinheit, ob die Zufuhr von wenigstens einem Typ von Umhüllungs- und/oder zusätzlichem und/oder Hilfsmaterial vorzunehmen ist oder nicht.

Die DE 10 2015 120 478 A1 offenbart ein System zur Diagnose eines Roboterzustandes, in dem dynamischen Daten analysiert werden, um festzulegen, wann eine Wartung oder Optimierung eines speziellen Roboters des Systems notwendig sind.

Die WO 2018 / 07647 A1 beschreibt ein Verpackungssystem mit Sensoren, welche Abmessungen von zu verpackenden Produkten ermitteln.

Zum Herstellen verpackter Lebensmittelprodukte ist es aus der Praxis bekannt, Produktionslinien vorzusehen, welche eine Aufschneidestation, eine Tiefziehverpackungsmaschine und eine Etikettierstation als Arbeitsstationen umfassen. An der Aufschneidestation werden Lebensmittelprodukte, beispielsweise Käse oder Wurstwaren, aufgeschnitten. Die aufgeschnittenen Lebensmittelprodukte werden dann in der Verpackungsmaschine verpackt. Die Verpackungsmaschine kann beispielsweise als Tiefziehverpackungsmaschine oder als Traysealer ausgebildet sein. In der Etikettierstation werden Etiketten auf die Verpackungen aufgebracht.

Bei bekannten Produktionslinien kann es erforderlich sein, dass in bestimmten Betriebssituationen an einer Arbeitsstation eine oder mehrere Handlungen von einem Bediener vorgenommen werden. Beispielsweise kann es erforderlich sein, dass der Bediener eine Folien-Vorratsrolle der Verpackungsmaschine auswechselt oder einen Etikettenvorrat der Etikettierstation auffüllt. Solche und andere für den weiteren Betrieb erforderlichen Arbeiten können zu Stillstandzeiten der Produktionslinie führen und so die Produktionsleistung herabsetzen.

Es ist Aufgabe der Erfindung, einen Weg bereitzustellen, wie eine Produktionslinie zum Herstellen verpackter Produkte möglichst effizient betrieben werden kann.

Gemäß einem Aspekt der Erfindung wird eine Produktionslinie zur Herstellung verpackter Produkte bereitgestellt. Die Produktionslinie umfasst mehrere Arbeitsstationen zum Durchführen unterschiedlicher Arbeitsschritte. Die Arbeitsstationen sind jeweils dazu konfiguriert, im Betrieb vorausschauend Zeit-Daten zu ermitteln, die einen Zeitpunkt einer in der Zukunft erforderlichen Bedienerinteraktion mit der jeweiligen Arbeitsstation als Interaktionszeitpunkt definieren. Die Produktionslinie umfasst eine zentrale Recheneinheit. Die Arbeitsstationen sind dazu konfiguriert, die Zeit-Daten an die zentrale Recheneinheit zu übermitteln.

Da die Zeit-Daten bereits vorausschauend ermittelt werden, wird eine rechtzeitige Vorbereitung auf die Bedienerinteraktion möglich, sodass die Bedienerinteraktion dann zeitnah, effizient und schnell durchführbar ist. Die Zeit-Daten können die Arbeitsorganisation der Bediener an der Produktionslinie vereinfachen.

Durch das Übermitteln der Zeit-Daten an die zentrale Recheneinheit liegen die Zeit-Daten von den einzelnen Arbeitsstationen zentral vor. Dies erleichtert eine Koordination des Betriebs der einzelnen Arbeitsstationen und der entsprechenden Bedienerinteraktionen. Die zentrale Recheneinheit kann die Zeit-Daten von den einzelnen Arbeitsstationen verwenden, um den Betrieb der Produktionslinie zu verbessern und/oder zu erleichtern.

Die Zeit-Daten können den Zeitpunkt der korrespondierenden Bedienerinteraktion auf unterschiedliche Arten definieren. Beispielsweise können die Zeit-Daten direkt den Zeitpunkt angeben, an dem die Bedienerinteraktion erforderlich wird, beispielsweise als Uhrzeitangabe oder als Maschinenzeitangabe. Alternativ können die Zeitdaten den Zeitpunkt, an dem die korrespondierende Bedienerinteraktion erforderlich wird, indirekt angeben, beispielsweise durch Angabe einer bis zum Eintritt des Zeitpunkts, an dem die Bedienerinteraktion erforderlich ist, verbleibende Zeit.

Das Übermitteln der Zeit-Daten an die zentrale Recheneinheit erfolgt vorzugsweise vor Eintritt des Interaktionszeitpunkts, insbesondere zumindest 10 Sekunden, oder zumindest 30 Sekunden, oder zumindest 60 Sekunden, oder zumindest 120 Sekunden, oder zumindest 300 Sekunden, oder zumindest 600 Sekunden vor Eintritt des Interaktionszeitpunkts.

Das Übermitteln der Zeit-Daten an die zentrale Recheneinheit kann über eine drahtgebundene Kommunikationsverbindung oder eine drahtlose Kommunikationsverbindung erfolgen. Das Übermitteln der Zeit-Daten an die zentrale Recheneinheit kann über einen Kommunikations-Bus erfolgen.

Die Arbeitsstationen können dazu konfiguriert sein, zu den Zeit-Daten korrespondierende Interaktions-Daten an die zentrale Recheneinheit zu übermitteln. Die Interaktions-Daten können eine Art der zu dem korrespondierenden Interaktionszeitpunkt erforderlichen Bedienerinteraktion definieren. Durch die Kombination aus Zeit-Daten und korrespondierenden Interaktions-Daten liegen an der zentralen Recheneinheit Informationen darüber vor, zu welchem Zeitpunkt welche Bedienerinteraktion erforderlich ist. Hierdurch wird eine geeignete Reaktion erleichtert.

Die Interaktions-Daten können beispielsweise Informationen darüber enthalten, an welcher Arbeitsstation die Bedienerinteraktion erforderlich ist. Alternativ oder zusätzlich können die Interaktions-Daten Informationen darüber enthalten, welche Handlungen im Zuge der Bedienerinteraktion erforderlich sind. Alternativ oder zusätzlich können die Interaktions-Daten Informationen darüber enthalten, aus welchem Grund die Bedienerinteraktion erforderlich ist. Alternativ oder zusätzlich können die Interaktions-Daten Handlungsanweisungen zum Durchführen der Bedienerinteraktion umfassen.

Die Interaktions-Daten können eine der Bedienerinteraktion zugeordnete Kennung umfassen. Die zentrale Recheneinheit kann dazu konfiguriert sein, die Kennung anhand einer Tabelle einer Bedienerinteraktion zuzuordnen oder anhand der Kennung eine oder mehrere zugeordnete Aktionen durchzuführen. Die eine oder mehrere Aktionen kann beispielsweise das Anzeigen einer der Kennung zugeordneten Bedienerinformation oder das Ausgeben einer der Kennung zugeordneten Meldung umfassen.

Die zentrale Recheneinheit kann dazu konfiguriert sein, anhand der Zeit-Daten von den Arbeitsstationen eine als nächstes anstehende Bedienerinteraktion zu bestimmen. Wenn bekannt ist, welche Bedienerinteraktion als nächstes ansteht, können gezielt Maßnahmen getroffen werden, um die entsprechende Bedienerinteraktion zum gegebenen Zeitpunkt ohne Verzögerung und effizient durchführen zu können.

Vorzugsweise umfasst die Produktionslinie eine Anzeigevorrichtung. Die Anzeigevorrichtung kann beispielsweise einen Bildschirm umfassen. Die Anzeigevorrichtung kann an der Produktionslinie, insbesondere an einer der Arbeitsstationen, vorgesehen und/oder angebracht sein. Alternativ kann die Anzeigevorrichtung getrennt von der Produktionslinie vorgesehen sein. Die Anzeigevorrichtung kann sich im selben Raum befinden wie die Produktionslinie. Alternativ kann die Anzeigevorrichtung außerhalb eines Raums vorgesehen sein, in dem sich die Produktionslinie befindet. Die Anzeigevorrichtung kann sogar in einem anderen Gebäude vorgesehen sein als die Produktionsrichtung. Die Anzeigevorrichtung kann eine stationäre Anzeigevorrichtung oder eine mobile Anzeigevorrichtung sein. Die zentrale Recheneinheit kann drahtlos oder drahtgebunden mit der Anzeigevorrichtung in Kommunikationsverbindung stehen. Die Kommunikationsverbindung zwischen der zentralen Recheneinheit und der Anzeigevorrichtung kann über ein lokales Kommunikationsprotokoll erfolgen. Die Kommunikationsverbindung zwischen der zentralen Recheneinheit und der Anzeigevorrichtung kann über das Internet oder über Mobilfunk erfolgen.

Die zentrale Recheneinheit kann dazu konfiguriert sein, die Anzeigevorrichtung zum Anzeigen der Interaktionszeitpunkte anzusteuern. Durch ein Anzeigen der Interaktionszeitpunkte wird dem Bediener das Betreiben der Produktionslinie erleichtert. Der Bediener wird durch Anzeigen der Interaktionszeitpunkte vorgewarnt und kann bereits vorab geeignete Vorkehrungen und Vorbereitungen treffen, um die entsprechende Bedienerinteraktion zeitnah und effizient durchführen zu können.

Die zentrale Recheneinheit kann dazu konfiguriert sein, die Anzeigevorrichtung derart anzusteuern, dass die Interaktionszeitpunkte bereits um eine Vorwarndauer vor dem Zeitpunkt der jeweils korrespondierenden in der Zukunft erforderlichen Bedienerinteraktion angezeigt werden. Die Vorwarndauer kann mindestens eine Minute, oder mindestens zwei Minuten, oder mindestens fünf Minuten, oder mindestens zehn Minuten, oder mindestens fünfzehn Minuten umfassen. Die Vorwarndauer kann je nach Art der Bedienerinteraktion und/oder je nach Arbeitsstation unterschiedlich sein.

Die Interaktionszeitpunkte können von der Anzeigevorrichtung beispielsweise durch Anzeigen von Uhrzeiten anzeigt werden, welche dem jeweiligen Zeitpunkt entsprechen, zu dem die Bedienerinteraktion erforderlich wird. Die Anzeigevorrichtung kann die Interaktionszeitpunkte durch Anzeigen einer bis zum Erreichen des jeweiligen Interaktionszeitpunkts verbleibenden Zeit anzeigen. Die Arbeitsstationen oder die zentrale Recheneinheit können dazu konfiguriert sein, die bis zum Erreichen des jeweiligen Interaktionszeitpunkts verbleibende Zeit zu bestimmen.

Die zentrale Recheneinheit kann dazu konfiguriert sein, die Anzeigevorrichtung dazu anzusteuern, zu jedem Interaktionszeitpunkt die Art der zu dem Interaktionszeitpunkt erforderlichen Bedienerinteraktion anzuzeigen. Die Anzeigevorrichtung kann die Art der Bedienerinteraktion beispielsweise durch Anzeigen einer Bezeichnung der Bedienerinteraktion oder durch Anzeigen eines zu der Bedienerinteraktion korrespondierenden Symbols anzeigen. Die Anzeigevorrichtung kann die Art der Bedienerinteraktion beispielsweise durch ein Anzeigen einer Angabe, insbesondere eines Textes anzeigen, welche dem Bediener erlaubt, auf die Art der Bedienerinteraktion zu schließen.

Die zentrale Recheneinheit kann dazu konfiguriert sein, die Anzeigevorrichtung dazu anzusteuern, die Interaktionszeitpunkte jeweils zusammen mit der Art der zu dem Interaktionszeitpunkt erforderlichen Bedienerinteraktion paarweise anzuzeigen.

Die zentrale Recheneinheit kann dazu konfiguriert sein, die Anzeigevorrichtung dazu anzusteuern, zusätzlich zu den Interaktionszeitpunkten anzuzeigen, an welcher Arbeitsstation die jeweilige Bedienerinteraktion durchzuführen ist.

Die zentrale Recheneinheit kann dazu konfiguriert sein, die Anzeigevorrichtung zum Anzeigen anzusteuern, welche Bedienerinteraktion als nächstes ansteht. Die zentrale Recheneinheit kann dazu konfiguriert sein, die Anzeigevorrichtung zum Anzeigen anzusteuern, an welcher Arbeitsstation als nächstes eine Bedienerinteraktion ansteht.

Die zentrale Recheneinheit kann dazu konfiguriert sein, anhand der Zeit-Daten eine chronologische Reihenfolge der in der Zukunft erforderlichen Bedienerinteraktionen zu ermitteln. Die Kenntnis einer chronologischen Reihenfolge der in der Zukunft erforderlichen Bedienerinteraktionen erleichtert ein zeitnahes und effizientes Durchführen der Bedienerinteraktionen. Die zentrale Recheneinheit kann dazu konfiguriert sein, die Anzeigevorrichtung zum Anzeigen der chronologischen Reihenfolge anzusteuern. Dies kann beispielsweise dadurch erfolgen, dass die Anzeigevorrichtung die Bedienerinteraktionen entsprechend der chronologischen Reihenfolge angeordnet anzeigt.

Die zentrale Recheneinheit kann dazu konfiguriert sein, basierend auf den Zeit-Daten elektronische Anweisungsnachrichten zu versenden. Die zentrale Recheneinheit kann dazu konfiguriert sein, basierend auf den Zeit-Daten in Kombination mit den Interaktions-Daten elektronische Anweisungs-Nachrichten zu versenden. Die elektronischen Anweisungs-Nachrichten können beispielsweise an eine Bedienperson gesendet werden, z.B. durch ein Ticketsystem oder per E-Mail. Mittels der Anweisungs-Nachrichten kann die Bedienperson rechtzeitig auf das Erfordernis einer Bedienerinteraktion hingewiesen werden. Die zentrale Recheneinheit kann konfiguriert sein, die elektronischen Anweisungs-Nachrichten an ein technisches System zu versenden. Beispielsweise kann die zentrale Recheneinheit dazu konfiguriert sein, die elektronischen Anweisungs-Nachrichten an ein automatisches Bereitstellungssystem zu senden. Das automatische Bereitstellungssystem kann dazu konfiguriert sein, für das Durchführen der Bedienerinteraktion erforderliche Mittel automatisiert bereitzustellen. Das automatische Bereitstellungssystem kann beispielsweise ein automatisiertes Lagersystem umfassen.

Die Arbeitsstationen können jeweils eine eigene Steuerung umfassen. Alternativ oder zusätzlich können beispielsweise eine oder mehrere der Arbeitsstationen von der zentralen Recheneinheit gesteuert werden. Die zentrale Recheneinheit kann an einer der Arbeitsstationen vorgesehen sein oder separat von den Arbeitsstationen vorgesehen sein.

Die mehreren Arbeitsstationen können eine oder mehrere (oder eine beliebige Kombination) der folgenden Stationen umfassen: eine Portionierstation, insbesondere einen Lebensmittel-Slicer; eine Etikettiervorrichtung; eine Verpackungsmaschine; eine Station einer Verpackungsmaschine. Die Verpackungsmaschine kann beispielsweise als Tiefziehverpackungsmaschine oder als Traysealer oder als Schlauchbeutelmaschine ausgebildet sein. Die Arbeitsstation der Verpackungsmaschine kann beispielsweise eine Tiefzieh-Station oder eine Siegelstation oder eine Schnittstation einer Verpackungsmaschine umfassen.

Eine oder mehrere der Arbeitsstationen können einen Zustands-Sensor umfassen. Die Zeit-Daten können die Ausgabewerte des Zustands-Sensors sein oder basierend auf den Ausgabewerten des Zustands-Sensors ermittelt werden.

Der Zustands-Sensor kann dazu konfiguriert sein, einen Wert an der Arbeitsstation zu messen, der für einen Zeitpunkt einer in der Zukunft erforderlichen Bedienerinteraktion indikativ ist. Beispielsweise kann der Zustands-Sensor dazu konfiguriert sein, einen Füllgrad eines Materialvorrats zu bestimmen, zum Beispiel durch Messen eines Durchmessers einer Vorratsrolle. Beispielsweise kann der Zustands-Sensor dazu konfiguriert sein, einen Füllgrad einer Abfallaufnahme zu bestimmen, zum Beispiel durch Messen eines Durchmessers einer Aufnahmerolle. Beispielsweise kann der Zustands-Sensor dazu konfiguriert sein, einen verbleibenden Materialvorrat zu bestimmen, zum Beispiel durch Zählen von dem Vorrat entnommener Materialstücke, wie zum Beispiel durch Zählen von einem Etikettenvorrat entnommener Etiketten. Beispielsweise kann der Zustands-Sensor dazu konfiguriert sein, eine Anzahl bereits produzierter Verpackungen oder eine Anzahl verarbeiteter Produkte zu bestimmen, zum Beispiel durch Zählen der Verpackungen oder Produkte oder durch Messen eines Materialverbrauchs.

Die Arbeitsstation oder die zentrale Recheneinheit können dazu konfiguriert sein, basierend auf dem von dem Zustands-Sensor bestimmten Wert einen Zeitpunkt einer in der Zukunft erforderlichen Bedienerinteraktion mit der jeweiligen Arbeitsstation zu ermitteln. Dies kann unter Berücksichtigung von in einem Speicher gespeicherten Daten oder unter Berücksichtig von Einstellungen oder Benutzereingaben erfolgen.

Gemäß einem weiteren Aspekt der Erfindung wird ein Verfahren zum Betreiben einer Produktionslinie zum Herstellen verpackter Produkte bereitgestellt. In dem Verfahren werden mehrere Arbeitsstationen der Produktionslinie zum Durchführen unterschiedlicher Arbeitsschritte betrieben. Im Betrieb werden durch die Arbeitsstationen vorausschauend Zeit-Daten ermittelt, die einen Zeitpunkt einer in der Zukunft erforderlichen Bedienerinteraktion mit der jeweiligen Arbeitsstation als Interaktionszeitpunkt definieren. Die Interaktionszeitpunkte werden an einer zentralen Anzeigevorrichtung angezeigt.

Vorzugsweise werden die Zeit-Daten von den Arbeitsstationen an eine zentrale Recheneinheit übermittelt.

Vorzugsweise wird an der zentralen Anzeigevorrichtung zusammen mit jedem der Interaktionszeitpunkte die Art der zu dem Interaktionszeitpunkt erforderlichen Bedienerinteraktion angezeigt.

Das Anzeigen der Interaktionszeitpunkte an der zentralen Anzeigevorrichtung kann ein Anzeigen einer bis zum Ende des jeweiligen Interaktionszeitpunkts verbleibenden Zeit umfassen.

An der zentralen Anzeigevorrichtung kann eine chronologische Reihenfolge der in der Zukunft erforderlichen Bedienerinteraktionen angezeigt werden.

Die in der Zukunft erforderliche Bedienerinteraktion kann zumindest eines von folgendem umfassen: Ein Nachfüllen von Verbrauchsmaterialien; einen Vorratsrollen-Wechsel; ein Entleeren einer Abfall-Aufnahme; ein Umstellen einer Maschine; ein Umrüsten einer Maschine; ein Deaktivieren einer Maschine; ein Reinigen einer Maschine; ein Warten einer Maschine.

Wie beschrieben, betrifft die Erfindung sowohl eine Produktionslinie als auch ein Verfahren zum Betreiben einer Produktionslinie. Die Produktionslinie kann dazu ausgelegt, geeignet und/oder konfiguriert sein, das Verfahren durchzuführen. Das Verfahren kann an der Produktionslinie oder durch die Produktionslinie durchführbar sein. Bezüglich der Produktionslinie beschriebene Merkmale und Erläuterungen lassen sich auf das Verfahren übertragen und umgekehrt.

Im Folgenden wird die Erfindung anhand von Ausführungsformen unter Bezugnahme auf die Figuren weiter erläutert.
Fig. 1 zeigt eine schematische Seitenansicht einer Produktionslinie gemäß einer Ausführungsform; und
Fig. 2 bis 4 zeigen schematische Darstellungen einer Anzeigevorrichtung der Produktionslinie gemäß unterschiedlichen Ausführungsformen.

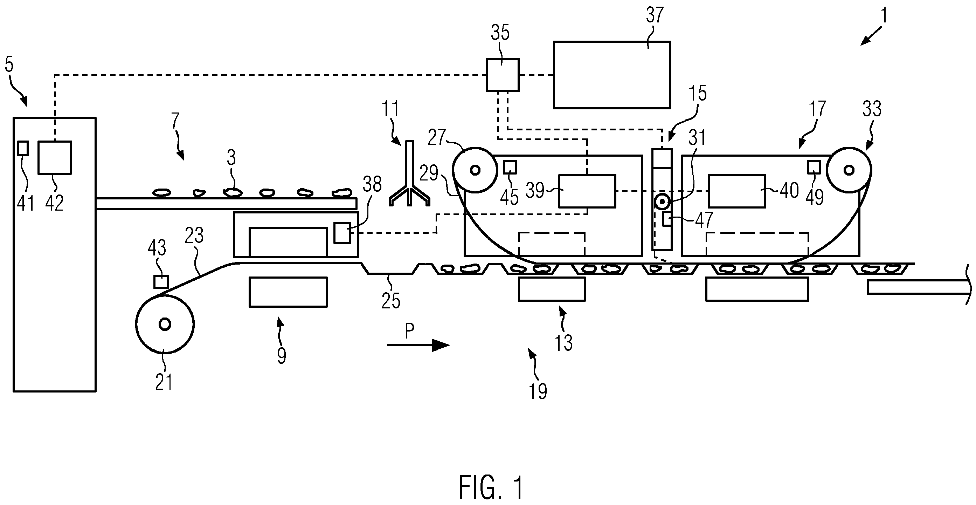

Figur 1 zeigt in schematischer Ansicht eine Produktionslinie 1 zum Verpacken von Produkten. Bei den Produkten kann es sich insbesondere um Lebensmittelprodukte handeln, beispielsweise Wurstwaren oder Käse. Die Produktionslinie 1 umfasst mehrere Arbeitsstationen zum Durchführen unterschiedlicher Arbeitsschritte zum Herstellen verpackter Produkte. In der dargestellten Ausführungsform umfasst die Produktionslinie 1 die folgenden Arbeitsstationen: Eine Portionierstation 5, eine Tiefziehstation 9, eine Siegelstation 13, eine Etikettiervorrichtung 15, und eine Schnittstation 17.

Die Portionierstation 5 ist dazu ausgelegt, die zu verpackenden Produkte in Portionen 3 zu teilen. Beispielsweise kann die Portionierstation 5 einen Lebensmittel-Slicer umfassen, welcher Produkte, wie Wurstwaren oder Käse, aufschneidet. Ein Produktförderband 7 fördert die Portionen 3 von der Portionierstation 5 zu einer Verpackungsmaschine 19, welche die Tiefziehstation 9, einen Greiferroboter 11, die Siegelstation 13 und die Schnittstation 17 umfasst. In der Verpackungsmaschine 19 wird eine von einer Unterfolien-Vorratsrolle 21 der Tiefziehstation 9 entnommene Unterfolienbahn 23 entlang einer Produktionsrichtung P gefördert. Die Tiefziehstation 9, der Greiferroboter 11, die Siegelstation 13, die Etikettiervorrichtung 15 und die Schnittstation 17 sind in der gezeigten Ausführungsform entlang der Produktionsrichtung P hintereinander angeordnet.

In der Tiefziehstation 9 werden in der Unterfolienbahn 23 Verpackungsmulden 25 durch Tiefziehen ausgebildet. Zum Durchführen des Tiefziehens umfasst die Tiefziehstation 9 ein Formwerkzeugoberteil und ein Formwerkzeugunterteil, die zum Tiefziehen der Unterfolienbahn 23 zusammenwirken. Bezüglich der Produktionsrichtung P der Tiefziehstation 9 nachgeordnet werden die Portionen 3 durch den Greiferroboter 11 von dem Produktförderband 7 in die Verpackungsmulden 25 umgesetzt. Bezüglich der Produktionsrichtung P dem Greiferroboter 11 nachgeordnet werden die Verpackungsmulden 25 in der Siegelstation 13 durch Ansiegeln einer von einer Oberfolien-Vorratsrolle 27 entnommenen Oberfolie 29 an die Unterfolie 23 verschlossen. Die Siegelstation 13 umfasst ein Siegelwerkzeugoberteil und ein Siegelwerkzeugunterteil, welche zum siegelnden Verbinden der Unterfolienbahn 23 mit der Oberfolienbahn 29 zusammenwirken. Das Siegeln kann unter Wärme- und/oder Druckeinwirkung erfolgen. Bezüglich der Produktionsrichtung P der Siegelstation 13 nachgeordnet werden die Verpackungen durch die Etikettiervorrichtung 15 mit Etiketten versehen. Die Etiketten können dabei einer Etiketten-Vorratsrolle 31 entnommen werden. Bezüglich der Produktionsrichtung P der Siegelstation 13 und/oder der Etikettiervorrichtung 15 nachgeordnet werden die verschlossenen Verpackungsmulden 25 durch die Schnittstation 17 aus dem Folienverbund separiert. Die Schnittstation 17 umfasst einen Restfolienaufwickler, welcher eine Abfallaufnahme 33 darstellt. Auf dem Restfolienaufwickler werden nach dem Separieren der Verpackungsmulden 25 verbleibende Folienreste, insbesondere ein Folienrestgitter, aufgerollt.

Die Verpackungslinie 1 umfasst eine zentrale Recheneinheit 35 und eine von dieser ansteuerbare Anzeigevorrichtung 37. Die Anzeigevorrichtung 37 kann beispielsweise ein Display umfassen.

In der dargestellten Ausführungsform umfassen die Arbeitsstationen jeweils eigene Steuereinheiten, die einige oder sämtliche Funktionen der jeweiligen Arbeitsstation steuern. Dies ist jedoch nicht zwingend erforderlich und es könnten sich beispielsweise mehrere Arbeitsstationen eine Steuereinheit teilen oder eine, mehrere oder sämtliche Arbeitsstationen durch die zentrale Recheneinheit 35 gesteuert werden.

In der dargestellten Ausführungsform ist die Steuereinheit 39 der Siegelstation 13 als Hauptsteuereinheit der Verpackungsmaschine 19 ausgebildet und dazu konfiguriert, die Steuereinheiten der verbleibenden Arbeitsstationen der Verpackungsmaschine 19 zu koordinieren. Eine Kommunikation zwischen der zentralen Recheneinheit 35 und der Steuereinheit 38 der Formstation 9 oder der Steuereinheit 40 der Schnittstation 17 erfolgt über die Steuereinheit 39 der Siegelstation 13. Alternativ könnten die Steuereinheit 38 der Formstation 9 und/oder die Steuereinheit 40 der Schnittstation 17 direkt mit der zentralen Steuereinheit 35 kommunizieren, die dies in der dargestellten Ausführungsform für die Steuereinheit 42 der Portionierstation 5 der Fall ist.

Die Arbeitsstationen sind dazu konfiguriert, im Betrieb vorausschauend Zeit-Daten zu ermitteln, die einen Zeitpunkt einer in der Zukunft erforderlichen Bedienerinteraktion mit der jeweiligen Arbeitsstation als Interaktionszeitpunkt definieren.

Im Fall der Portionierstation 5 kann die Bedienerinteraktion beispielsweise ein Nachfüllen weiterer Produkte sein. Die Portionierstation 5 kann einen Produktsensor 41 als Zustands-Sensor umfassen, welcher eine Menge eines zu dem jeweiligen Zeitpunkt noch in der Portionierstation 5 vorliegenden, zu portionierenden Produkts bestimmt. Von dem Produktsensor 41 ermittelte Messdaten definieren einen zukünftigen Zeitpunkt, zu dem das Nachfüllen weiterer Produkte erforderlich ist. Der Zeitpunkt kann unter Berücksichtigung des bekannten Produktdurchsatzes der Verpackungslinie 1 berechnet werden.

Im Fall der Formstation 9 kann die Bedienerinteraktion beispielsweise ein Wechsel der Unterfolien-Vorratsrolle 21 sein. Die Formstation 9 umfasst einen Unterfolien-Vorratsrollen-Sensor 43, welcher misst, wie viel Unterfolie 23 noch auf der Unterfolien-Vorratsrolle 21 vorhanden ist. Hierzu kann der Unterfolien-Vorratsrollen-Sensor 43 beispielsweise einen Durchmesser oder einen Radius der Unterfolien-Vorratsrolle 21 zu dem jeweiligen Zeitpunkt messen. Von dem Unterfolien-Vorratsrollen-Sensor 43 ermittelte Messdaten definieren einen zukünftigen Zeitpunkt, zu dem ein Wechsel der Unterfolien-Vorratsrolle 21 erforderlich ist. Der Zeitpunkt kann unter Berücksichtigung der bekannten Produktionsrate der Verpackungslinie 1 berechnet werden.

Im Fall der Siegelstation 13 kann die Bedienerinteraktion beispielsweise ein Wechsel der Oberfolien-Vorratsrolle 27 sein. Die Siegelstation 13 umfasst einen Oberfolien-Vorratsrollen-Sensor 45, welcher dazu konfiguriert ist, zu bestimmen, wie viel Oberfolie 29 noch auf der Oberfolien-Vorratsrolle 27 vorhanden ist. Hierzu kann der Oberfolien-Vorratsrollen-Sensor 45 beispielsweise einen Durchmesser oder einen Radius der Oberfolien-Vorratsrolle 27 zu dem jeweiligen Zeitpunkt messen. Von dem Oberfolien-Vorratsrollen-Sensor 45 ermittelte Messdaten definieren einen zukünftigen Zeitpunkt, zu dem ein Wechsel der Oberfolien-Vorratsrolle 27 erforderlich ist. Der Zeitpunkt kann unter Berücksichtigung der bekannten Produktionsrate der Verpackungslinie 1 berechnet werden.

Im Fall der Etikettiervorrichtung 15 kann die Bedienerinteraktion beispielsweise ein Wechsel der Etiketten-Vorratsrolle 31 sein. Die Etikettiervorrichtung 15 umfasst einen Etikettenrollen-Sensor 47, welcher dazu konfiguriert ist, zu bestimmen, wie viel Etiketten noch auf der Etiketten-Vorratsrolle 31 vorhanden sind. Hierzu kann der Etikettenrollen-Sensor 47 beispielweise die Anzahl der entnommenen Etiketten zählen. Von dem Etikettenrollen-Sensor 47 ermittelte Messdaten definieren einen zukünftigen Zeitpunkt, zu dem ein Wechsel der Etiketten-Vorratsrolle 31 erforderlich ist.

Im Fall der Schnittstation 17 kann die Bedienerinteraktion beispielweise ein Wechsel oder ein Entleeren der Abfallaufnahme 33 sein. Die Schnittstation 17 umfasst einen Füllstands-Sensor 49, welcher dazu konfiguriert ist, wie viel Folienrestgitter bereits auf der Abfallaufnahme 33 aufgerollt ist. Hierzu kann der Füllstands-Sensor 49 beispielsweise einen Rollendurchmesser oder einen Rollenradius des aufgerollten Folienrestgitters zu dem jeweiligen Zeitpunkt messen. Von dem Füllstands-Sensor 49 ermittelte Messdaten definieren einen zukünftigen Zeitpunkt, zu dem ein Wechsel oder ein Entleeren der Abfallaufnahme 33 erforderlich ist. Der Zeitpunkt kann unter Berücksichtigung einer maximalen Aufnahmekapazität der Abfallaufnahme 33 berechnet werden.

Die Arbeitsstationen übermitteln die Zeit-Daten an die zentrale Recheneinheit 35. Dies kann durch Übermitteln der Messdaten des jeweiligen Sensors als die Zeit-Daten erfolgen. Basierend auf den übermittelten Messdaten kann die zentrale Recheneinheit 35 dann den jeweiligen zukünftigen Interaktionszeitpunkt ermitteln, insbesondere berechnen. Alternativ können die Arbeitsstationen basierend auf den Messdaten des jeweiligen Sensors den jeweiligen zukünftigen Interaktionszeitpunkt ermitteln und diesen als die Zeit-Daten an die zentrale Recheneinheit 35 übermitteln.

Zusätzlich zu den Zeit-Daten übermitteln die Arbeitsstationen an die zentrale Recheneinheit 35 Interaktionsdaten, die eine Art der zu dem korrespondierenden Interaktionszeitpunkt erforderlichen Bedienerinteraktion definieren. Die Interaktions-Daten können eine der Bedienerinteraktion zugeordnete Kennung umfassen. Die zentrale Recheneinheit 35 kann dazu konfiguriert sein, die Kennung anhand einer Tabelle einer Bedienerinteraktion zuzuordnen.

Die zentrale Recheneinheit 35 ermittelt anhand der Zeit-Daten eine chronologische Reihenfolge der in der Zukunft erforderlichen Bedienerinteraktionen.

Die zentrale Recheneinheit 35 steuert die Anzeigevorrichtung 37 an, die Interaktionszeitpunkte und zugeordneten Bedienerinteraktionen in chronologischer Reihenfolge anzuzeigen. Ein Bediener wird durch Anzeigen der Interaktionszeitpunkte vor Eintritt der Interaktionszeitpunkte vorgewarnt und kann bereits vorab geeignete Vorkehrungen und Vorbereitungen treffen, um die entsprechende Bedienerinteraktion zeitnah und effizient durchführen zu können.

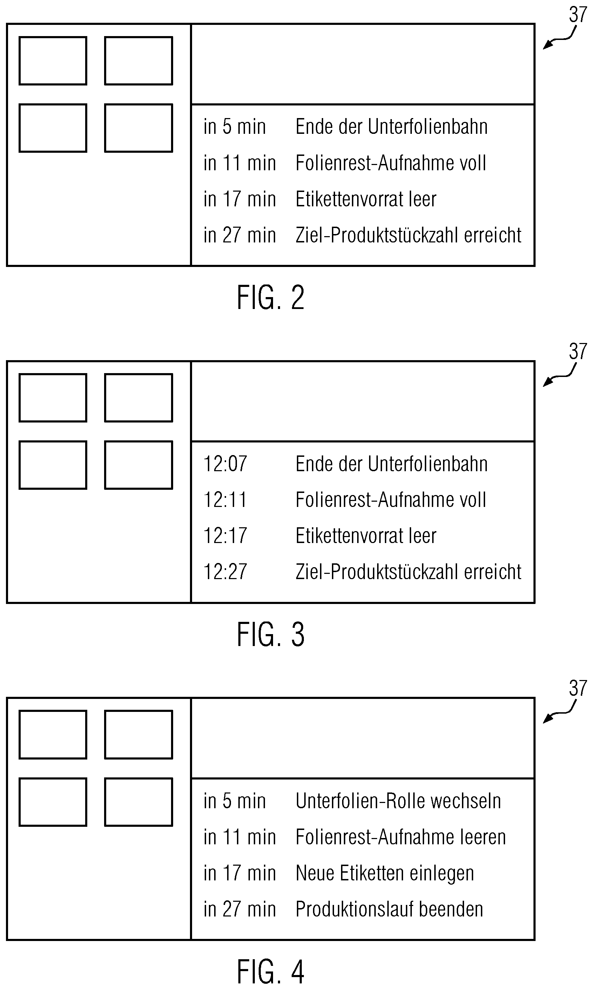

Fig. 2 zeigt eine Anzeige der Anzeigevorrichtung 37 gemäß einer Ausführungsform, in der die Interaktionszeitpunkte durch Anzeigen einer bis zum Erreichen des jeweiligen Interaktionszeitpunkts verbleibenden Zeit angezeigt werden. Neben jedem Interaktionszeitpunkt wird angezeigt, durch welches Ereignis die vorausgesagte Bedienerinteraktion erforderlich wird. Dies entspricht einem Anzeigen der Art der Bedienerinteraktion. Beispielsweise erschließt sich dem Bediener aus der Angabe "Ende der Unterfolienbahn", dass sich der Eintrag auf das Erfordernis bezieht, die Unterfolien-Vorratsrolle 21 auszuwechseln. Aus der Angabe "Folienrest-Aufnahme voll" erschließt sich dem Bediener, dass sich der Eintrag auf das Erfordernis bezieht, die Abfallaufnahme 33 zu leeren oder zu tauschen. Aus der Angabe "Etikettenvorrat leer" erschließt sich dem Bediener, dass sich der Eintrag auf das Erfordernis bezieht, die Etiketten-Vorratsrolle 31 auszuwechseln. Aus der Angabe "Ziel-Produktstückzahl erreicht" erschließt sich dem Bediener, dass sich der Eintrag auf das Erfordernis bezieht, den Betrieb der Produktionslinie zu stoppen. Optional könnte zu jedem Eintrag angezeigt werden, an welcher Arbeitsstation die jeweilige Bedienerinteraktion erfolgen soll.

Fig. 3 zeigt die Anzeige der Anzeigevorrichtung 37 gemäß einer alternativen Ausführungsform, in der die Interaktionszeitpunkte durch Anzeigen von Uhrzeiten anzeigt werden, welche dem jeweiligen Zeitpunkt entsprechen, zu dem die Bedienerinteraktion erforderlich wird. Bis auf die Art der Anzeige der Interaktionszeitpunkte entspricht die Ausführungsform von Fig. 3 der Ausführungsform aus Fig. 2.

Fig. 4 zeigt die Anzeige der Anzeigevorrichtung 37 gemäß einer weiteren alternativen Ausführungsform, die bis auf die Anzeige der Art der Bedienerinteraktion mit Fig. 2 übereinstimmt. In der Ausführungsform nach Fig. 4 wird explizit angezeigt, was der Bediener bei der jeweiligen Bedienerinteraktion zu tun hat.

## Patentansprüche

1. Produktionslinie (1) zum Herstellen verpackter Produkte,
wobei die Produktionslinie (1) mehrere Arbeitsstationen (5, 9, 13, 15, 17) zum Durchführen unterschiedlicher Arbeitsschritte umfasst; und
wobei die Produktionslinie (1) eine zentrale Recheneinheit (35) umfasst;
**dadurch gekennzeichnet, dass**
die Arbeitsstationen (5, 9, 13, 15, 17) jeweils dazu konfiguriert sind, im Betrieb vorausschauend Zeit-Daten zu ermitteln, die einen Zeitpunkt einer in der Zukunft erforderlichen Bedienerinteraktion mit der jeweiligen Arbeitsstation (5, 9, 13, 15, 17) als Interaktionszeitpunkt definieren;
wobei die Arbeitsstationen (5, 9, 13, 15, 17) dazu konfiguriert sind, die Zeit-Daten an die zentrale Recheneinheit (35) zu übermitteln.

2. Produktionslinie nach Anspruch 1, wobei die Arbeitsstationen (5, 9, 13, 15, 17) dazu konfiguriert sind, zu den Zeit-Daten korrespondierende Interaktions-Daten an die zentrale Recheneinheit (35) zu übermitteln, wobei die Interaktions-Daten eine Art der zu dem korrespondierenden Interaktionszeitpunkt erforderlichen Bedienerinteraktion definieren.

3. Produktionslinie nach Anspruch 1 oder 2, wobei die zentrale Recheneinheit (35) dazu konfiguriert ist, anhand der Zeit-Daten von den Arbeitsstationen (5, 9, 13, 15, 17) eine als nächstes anstehende Bedienerinteraktion zu bestimmen.

4. Produktionslinie nach einem der vorangehenden Ansprüche, wobei die Produktionslinie (1) eine Anzeigevorrichtung (37) umfasst.

5. Produktionslinie nach Anspruch 4, wobei die zentrale Recheneinheit (35) dazu konfiguriert ist, die Anzeigevorrichtung (37) zum Anzeigen der Interaktionszeitpunkte anzusteuern, insbesondere zum Anzeigen der Interaktionszeitpunkte durch Anzeigen einer bis zum Erreichen des jeweiligen Interaktionszeitpunkts verbleibenden Zeit.

6. Produktionslinie nach Anspruch 4 oder 5, wobei die zentrale Recheneinheit (35) dazu konfiguriert ist, die Anzeigevorrichtung (37) dazu anzusteuern, zu jedem Interaktionszeitpunkt die Art der zu dem Interaktionszeitpunkt erforderlichen Bedienerinteraktion anzuzeigen.

7. Produktionslinie nach einem der Ansprüche 4 bis 6, wobei die zentrale Recheneinheit (35) dazu konfiguriert ist, die Anzeigevorrichtung (37) zum Anzeigen anzusteuern, welche Bedienerinteraktion als nächstes ansteht.

8. Produktionslinie nach einem der vorangehenden Ansprüche, wobei die zentrale Recheneinheit (35) dazu konfiguriert ist, anhand der Zeit-Daten eine chronologische Reihenfolge der in der Zukunft erforderlichen Bedienerinteraktionen zu ermitteln, und insbesondere die Anzeigevorrichtung (37) zum Anzeigen der chronologischen Reihenfolge anzusteuern.

9. Produktionslinie nach einem der vorangehenden Ansprüche, wobei die zentrale Recheneinheit (35) dazu konfiguriert ist, basierend auf den Zeit-Daten, insbesondere in Kombination mit den Interaktions-Daten, elektronische Anweisungs-Nachrichten zu versenden.

10. Produktionslinie nach einem der vorangehenden Ansprüche, wobei die mehreren Arbeitsstationen (5, 9, 13, 15, 17) eine oder mehrere der folgenden Stationen umfassen: eine Portionierstation (5), insbesondere einen Lebensmittel-Slicer; eine Etikettiervorrichtung (15); eine Verpackungsmaschine (19); eine Station einer Verpackungsmaschine (19).

11. Verfahren zum Betreiben einer Produktionslinie (1) zum Herstellen verpackter Produkte, wobei:
mehrere Arbeitsstationen (5, 9, 13, 15, 17) der Produktionslinie (1) zum Durchführen unterschiedlicher Arbeitsschritte betrieben werden;
**dadurch gekennzeichnet, dass**
durch die Arbeitsstationen (5, 9, 13, 15, 17) im Betrieb Zeit-Daten vorausschauend ermittelt werden, die einen Zeitpunkt einer in der Zukunft erforderlichen Bedienerinteraktion mit der jeweiligen Arbeitsstation (5, 9, 13, 15, 17) als Interaktionszeitpunkt definieren; und
die Interaktionszeitpunkte an einer zentralen Anzeigevorrichtung (37) angezeigt werden.

12. Verfahren nach Anspruch 11, wobei an der zentralen Anzeigevorrichtung (37) mit jedem Interaktionszeitpunkt die Art der zu dem Interaktionszeitpunkt erforderlichen Bedienerinteraktion angezeigt wird.

13. Verfahren nach Anspruch 11 oder 12, wobei das Anzeigen der Interaktionszeitpunkte an der zentralen Anzeigevorrichtung (37) ein Anzeigen einer bis zum Erreichen des jeweiligen Interaktionszeitpunkts verbleibenden Zeit umfasst.

14. Verfahren nach einem der Ansprüche 11 bis 13, wobei an der zentralen Anzeigevorrichtung (37) eine chronologische Reihenfolge der in der Zukunft erforderlichen Bedienerinteraktionen angezeigt wird.

15. Verfahren nach einem der Ansprüche 11 bis 14, wobei die in der Zukunft erforderliche Bedienerinteraktion zumindest eines von Folgendem umfasst: ein Nachfüllen von Verbrauchsmaterialien; einen Vorratsrollen-Wechsel; ein Entleeren einer Abfall-Aufnahme (33); ein Umstellen einer Maschine; ein Umrüsten einer Maschine; ein Deaktivieren einer Maschine; ein Reinigen einer Maschine; ein Warten einer Maschine.

## Claims

1. Production line (1) for producing packaged products,
wherein the production line (1) comprises a plurality of workstations (5, 9, 13, 15, 17) for performing different work steps; and
wherein the production line (1) comprises a central processing unit (35);
**characterized in that**
each of the workstations (5, 9, 13, 15, 17) is configured to predictively determine, during operation, time data defining, as an interaction time, a time of an operator interaction with the respective workstation (5, 9, 13, 15, 17) required in the future;
wherein the workstations (5, 9, 13, 15, 17) are configured to transmit the time data to the central processing unit (35).

2. Production line according to claim 1, wherein the workstations (5, 9, 13, 15, 17) are configured to communicate to the central processing unit (35) interaction data corresponding to the time data, wherein the interaction data define a type of operator interaction required at the corresponding interaction time.

3. Production line according to claim 1 or 2, wherein the central processing unit (35) is configured to determine a next upcoming operator interaction based on the time data from the workstations (5, 9, 13, 15, 17).

4. Production line according to any one of the preceding claims, wherein the production line (1) comprises a display device (37).

5. Production line according to claim 4, wherein the central processing unit (35) is configured to control the display device (37) so as to display the interaction times, in particular to display the interaction times by displaying a time remaining until the respective interaction time is reached.

6. Production line according to claim 4 or 5, wherein the central processing unit (35) is configured to control the display device (37) so as to display for each interaction time the type of operator interaction required at the interaction time.

7. Production line according to any one of claims 4 to 6, wherein the central processing unit (35) is configured to control the display device (37) so as to indicate which operator interaction is due next.

8. Production line according to any one of the preceding claims, wherein the central processing unit (35) is configured to determine, based on the time data, a chronological order of the operator interactions required in the future, and in particular to control the display device (37) to display the chronological order.

9. Production line according to any one of the preceding claims, wherein the central processing unit (35) is configured to send electronic instruction messages based on the time data, in particular in combination with the interaction data.

10. Production line according to any one of the preceding claims, wherein the plurality of workstations (5, 9, 13, 15, 17) comprises one or more of the following stations: a portioning station (5), in particular a food slicer; a labelling device (15); a packaging machine (19); a station of a packaging machine (19).

11. Method for operating a production line (1) for manufacturing packaged products, wherein:
a plurality of workstations (5, 9, 13, 15, 17) of the production line (1) are operated so as to perform different work steps;
**characterized in that**
the workstations (5, 9, 13, 15, 17) predictively determine, during operation, time data defining, as an interaction time, a time of an operator interaction with the respective workstation (5, 9, 13, 15, 17) required in the future; and
the interaction times are displayed at a central display device (37).

12. Method according to claim 11, wherein the type of operator interaction required at the interaction time is displayed at the central display device (37) together with each interaction time.

13. Method according to claim 11 or 12, wherein displaying the interaction times at the central display device (37) comprises displaying a time remaining until the respective interaction time is reached.

14. Method according to any one of claims 11 to 13, wherein a chronological order of operator interactions required in the future is displayed at the central display device (37).

15. Method according to any one of claims 11 to 14, wherein the operator interaction required in the future comprises at least one of: a replenishment of consumables; a supply roll change; an emptying of a waste receptacle (33); a re-setting of a machine; a changeover of a machine; a deactivation of a machine; a cleaning of a machine; a servicing of a machine.

## Revendications

1. Ligne de production (1) pour la fabrication de produits emballés,
dans laquelle la ligne de production (1) comprend plusieurs postes de travail (5, 9, 13, 15, 17) pour effectuer différentes étapes de travail ; et
dans laquelle la ligne de production (1) comprend un processeur (35) ;
**caractérisée en ce que**
les postes de travail (5, 9, 13, 15, 17) sont respectivement configurés pour, en service, déterminer de manière prévisionnelle des données temporelles qui définissent un moment d'une interaction d'opérateur requise dans le futur avec le poste de travail respectif (5, 9, 13, 15, 17) comme moment d'interaction ;
dans laquelle les postes de travail (5, 9, 13, 15, 17) sont configurés pour transmettre les données temporelles au processeur (35).

2. Ligne de production selon la revendication 1, dans laquelle les postes de travail (5, 9, 13, 15, 17) sont configurés pour transmettre au processeur (35) des données d'interaction correspondant aux données temporelles, dans laquelle les données d'interaction définissent le type de l'interaction d'opérateur requise au moment d'interaction correspondant.

3. Ligne de production selon la revendication 1 ou 2, dans laquelle le processeur (35) est configuré pour déterminer une interaction d'opérateur comme étant la prochaine interaction d'opérateur en attente sur la base des données temporelles provenant des postes de travail (5, 9, 13, 15, 17).

4. Ligne de production selon l'une des revendications précédentes, dans laquelle la ligne de production (1) comprend un dispositif d'affichage (37).

5. Ligne de production selon la revendication 4, dans laquelle le processeur (35) est configuré pour commander le dispositif d'affichage (37) de manière à afficher les moments d'interaction, en particulier de manière à afficher les moments d'interaction en affichant un temps restant jusqu'à ce que le moment d'interaction respectif soit atteint.

6. Ligne de production selon la revendication 4 ou 5, dans laquelle le processeur (35) est configuré pour commander au dispositif d'affichage (37) d'afficher, à chaque moment d'interaction, le type de l'interaction d'opérateur requise au moment d'interaction.

7. Ligne de production selon l'une des revendications 4 à 6, dans laquelle le processeur (35) est configuré pour commander au dispositif d'affichage (37) d'afficher quelle interaction d'opérateur est la prochaine interaction d'opérateur en attente.

8. Ligne de production selon l'une des revendications précédentes, dans laquelle le processeur (35) est configuré pour déterminer une séquence chronologique des interactions d'opérateur requises dans le futur sur la base des données temporelles, et en particulier pour commander au dispositif d'affichage (37) d'afficher la séquence chronologique.

9. Ligne de production selon l'une des revendications précédentes, dans laquelle le processeur (35) est configuré pour envoyer des messages d'instruction électroniques sur la base des données temporelles, en particulier en combinaison avec les données d'interaction.

10. Ligne de production selon l'une des revendications précédentes, dans laquelle la pluralité de postes de travail (5, 9, 13, 15, 17) comprend un ou plusieurs des postes suivants : un poste de préparation de portions (5), en particulier une trancheuse d'aliments ; un dispositif d'étiquetage (15) ; une machine d'emballage (19) ; un poste de machine d'emballage (19).

11. Procédé de fonctionnement d'une ligne de production (1) pour la fabrication de produits emballés, dans lequel :
plusieurs postes de travail (5, 9, 13, 15, 17) de la ligne de production (1) sont exploités pour réaliser différentes étapes de travail ;
**caractérisé en ce que**
en service, des données temporelles sont déterminées de manière prévisionnelle par les postes de travail (5, 9, 13, 15, 17) et définissent un moment d'une interaction d'opérateur requise dans le futur avec le poste de travail respectif (5, 9, 13, 15, 17) comme moment d'interaction ; et
les moments d'interaction sont affichés sur un dispositif d'affichage central (37).

12. Procédé selon la revendication 11, dans lequel le type de l'interaction d'opérateur requise au moment d'interaction est affiché sur le dispositif d'affichage central (37) pour chaque moment d'interaction.

13. Procédé selon la revendication 11 ou 12, dans lequel l'affichage des moments d'interaction sur le dispositif d'affichage central (37) comprend l'affichage d'un temps restant jusqu'à ce que le moment d'interaction respectif soit atteint.

14. Procédé selon l'une des revendications 11 à 13, dans lequel une séquence chronologique des interactions d'opérateur requises dans le futur est affichée sur le dispositif d'affichage central (37).

15. Procédé selon l'une des revendications 11 à 14, dans lequel l'interaction d'opérateur requise dans le futur comprend au moins l'une des interactions suivantes :
recharge de consommables ; changement d'un rouleau d'alimentation ; vidange d'un bac à déchets (33) ;
reconfiguration d'une machine ; rééquipement d'une machine ; désactivation d'une machine ; nettoyage d'une machine ; entretien d'une machine.
